# EUROPEAN PATENT APPLICATION

(11) **EP 2 369 796 A1**
(43) Date of publication of application: **28.09.2011**
(21) Application number: 10305315.3
(22) Date of filing: 26.03.2010
(51) Int. Cl.: H04L 12/58

(54) **Method of enabling personalized font messaging and related devices.**

(71) Applicant: France Telecom, 75015 Paris (FR)
(72) Inventor: Wood, Alana, LONDON, W4 5LY (GB); Guillou, Aurélien, LONDON, TW9 2JB (GB)
(74) Representative: Cabinet Plasseraud

(57) **Abstract**

Method of enabling personalized font messaging in a communication network (3), the method comprising a registration phase including, with respect to a first user having a first communication device (1): obtaining (12) a handwritten alphabet from the first user; deriving a personalized font relating to the first user from the obtained handwritten alphabet; and storing, in the communication network, the personalized font in association with an identifier of the first user or of the first communication device.

## Description

The present invention relates to messaging.

It is common practice to transmit messages between communication devices through a communication network. Many transmission protocols and services are available for doing so.

As an example, messages can be transmitted between mobile phones through a radio communication network by using the Short Message Service (SMS). Such messages contain only characters from an alphabet consisting in letters and/or numbers, and are limited in length to 160 characters. When displayed on a mobile phone screen, the SMS messages thus look like mere text using a predetermined font which is often the same as the one used by the mobile phone for other purposes (menus, settings, prompts, etc.).

Such format was considered to offer too poor experience to mobile phone users. So other messaging technologies emerged, such as the Multimedia Messaging Service (MMS). MMS extends the capacities of SMS by allowing transmission of messages with more than 160 characters. In addition to text, the MMS messages can also include multimedia content such as videos, pictures, ringtones, etc.

MMS thus offers a much better experience to users than SMS. However, with respect to text included in messages, substantially the same limitation as for SMS still exists with MMS, since a default or native character font of a mobile phone is generally used to display said text on the mobile phone screen.

There have been recent developments to further enhance the experience by allowing users to send more colourful and visually attractive messages from their mobile device to any MMS capable device. To achieve this goal, an application needs to be installed on the sending mobile phone to get access to a sophisticated and attractive user interface, through which enhanced MMS messages can be composed.

With this technology, it is possible for users to compose text messages by using new font styles, which differ from the default or native font of their mobile phone. However, even in this case the font styles will be limited to predetermined fonts, which are made available to the mobile phones when installing the application.

No further personalization of the text messages is possible so far.

Note that, although the problem mentioned above has been more particularly described with reference to message transmission between mobile phones through a radio communication network, it may occur likewise in many other contexts. The same problem exists in particular with other messaging applications, such as email, instant messaging, social networks, etc. It can also occur in different types of communication networks (e.g. fixed networks, PSTN, Internet, etc.) involving various communication devices (desktops, laptops, fixed phones, personal digital assistants, etc.)

To limit at least some disadvantages of the prior art techniques mentioned above, the invention proposes a method of enabling personalized font messaging in a communication network. This method comprises a registration phase including, with respect to a first user having a first communication device:
- obtaining a handwritten alphabet from the first user;
- deriving a personalized font relating to the first user from the obtained handwritten alphabet;
- storing, in the communication network, the personalized font in association with an identifier of the first user or of the first communication device.

The handwritten alphabet from the first user can be obtained by the first communication device and/or by the communication network. Likewise, deriving a personalized font relating to the first user from the obtained handwritten alphabet can be performed by the first communication device and/or by the communication network. If both steps are performed by the first communication device only, the first communication device may then send the derived personalized font to the communication network for storage.

Once the personalized font is stored in the communication network, it may be used by the first user or another user to visualize a message sent by the first user on a communication device, thus allowing a personalized nice and more intimate visual experience.

This can be achieved while the message subsequently transmitted may use a non-evolved technology, such as SMS.

According to a further aspect, the invention may comprise a subsequent message transmission phase for the transmission of a message from the first communication device of the registered first user to a second communication device of a second user through the communication network. The message transmission phase includes:
- receiving, at the communication network, a message from the first communication device, said message being inputted on the first communication device by the first user without performing a handwriting operation;
- retrieving, in the communication network, the personalized font relating to the first user stored in association with an identifier of the first user or of the first communication device;
- transmitting the message from the communication network to the second communication device;
- selectively transmitting from the communication network to the second communication device a means for obtaining the retrieved personalized font, so as to allow the second communication device to display the message using said personalized font.

The invention also proposes a device or system in a communication network for enabling personalized font messaging according to the method of any one of the foregoing claims, comprising with respect to a first user having a first communication device:
- means for obtaining a personalized font relating to the first user, derived from a handwritten alphabet from the first user;
- a memory arranged for storing the personalized font in association with an identifier of the first user or of the first communication device.

The invention also proposes a communication device comprising:
- a transmission unit arranged for transmitting a handwritten alphabet and/or a personalized font derived from a handwritten alphabet to a communication network;
- a memory arranged for storing at least one personalized font relating to at least one user respectively;
- a retrieving unit for retrieving a personalized font stored in said memory and relating to a user who has composed a message to be displayed; and
- a display unit arranged for displaying said message using said personalized font.

The invention also proposes a computer program product comprising code instructions for carrying out the following operations, when loaded and run on a communication device:
- transmitting a handwritten alphabet and/or a personalized font derived from a handwritten alphabet to a communication network;
- storing in a memory of the communication device at least one personalized font relating to at least one user respectively; and
- retrieving a personalized font stored in said memory and relating to a user who has composed a message to be displayed.

The preferred features of the above aspects which are indicated by the dependent claims may be combined as appropriate, and may be combined with any of the above aspects of the invention, as would be apparent to a person skilled in the art.
- FIG. 1 shows an exemplary architecture of a system in which the present invention may take place;
- FIG.2 is a diagram showing exemplary steps carried out within the framework of a registration phase according to an embodiment of the present invention;
- FIG.3 shows an exemplary registration form that may be used within the framework of a registration phase according to an embodiment of the present invention;
- FIG.4 schematically shows the visual rendering of a message on a communication device, when using a personalized font derived from handwriting;
- FIG.5 is a diagram showing exemplary steps carried out within the framework of a message transmission phase according to an embodiment of the present invention;
- FIG.6 is a collaboration diagram showing entities involved in an embodiment of the present invention;
- FIG.7 is a diagram showing image processing operations according to an embodiment of the present invention.

A first aspect of the invention aims at enabling personalized font messaging (i.e. cursive messaging) in a communication network. This aspect comprises a registration phase with respect to a user having a communication device.

The communication network and the communication device can take any possible form depending on the needs. According to non-limiting examples, the communication network may be a radio communication network (GSM, UMTS, LTE, WiFi, WiMax, etc.), a fixed network (PSTN, Internet, etc.), a combination thereof, or other. As for the communication device, it may consist in a mobile phone, a smartphone, a desktop, a laptop, a fixed phone, a personal digital assistant, or other.

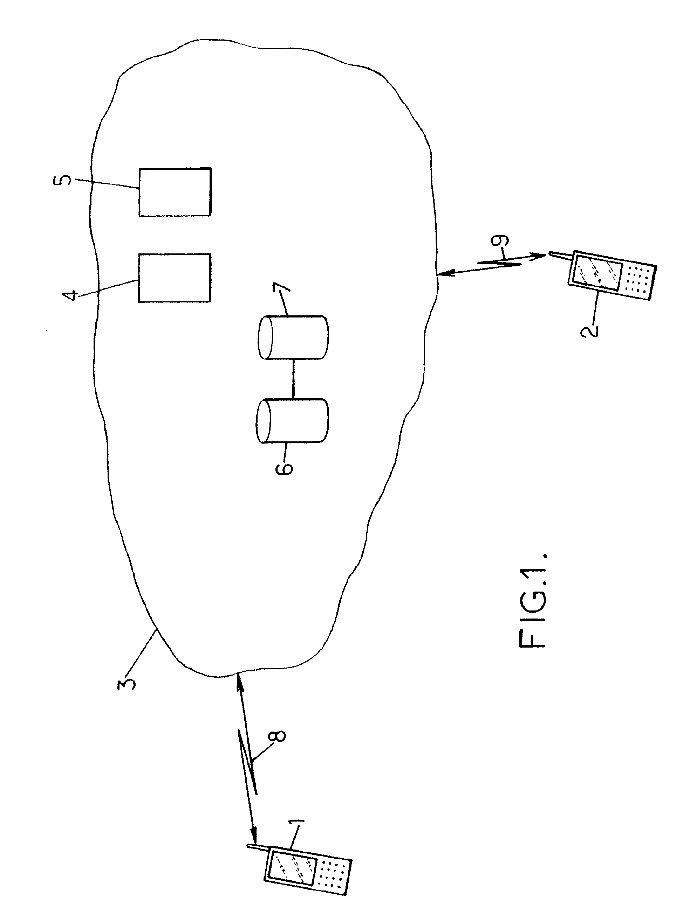

FIG.1 shows a non-limiting example of a system in which the invention can take place. The system includes a radio communication network 3 including device(s) such as server(s) and database(s) which will be described more in detail below. A communication device 1 in the form of a mobile phone or smartphone is also shown. The communication device 1 is arranged for communicating with the radio communication network 3 through an appropriate radio link 8. In particular, it is capable of making a call and/or a data transmission with a remote communication device 2 via the radio communication network 3. Like the communication device 1, the communication device 2 can be of any type (a mobile phone, a smartphone, a desktop, a laptop, a fixed phone, a personal digital assistant, or other), although it is shown in FIG. 1 in the form of a mobile phone or smartphone 1 having a radio link 9 with the communication network 3.

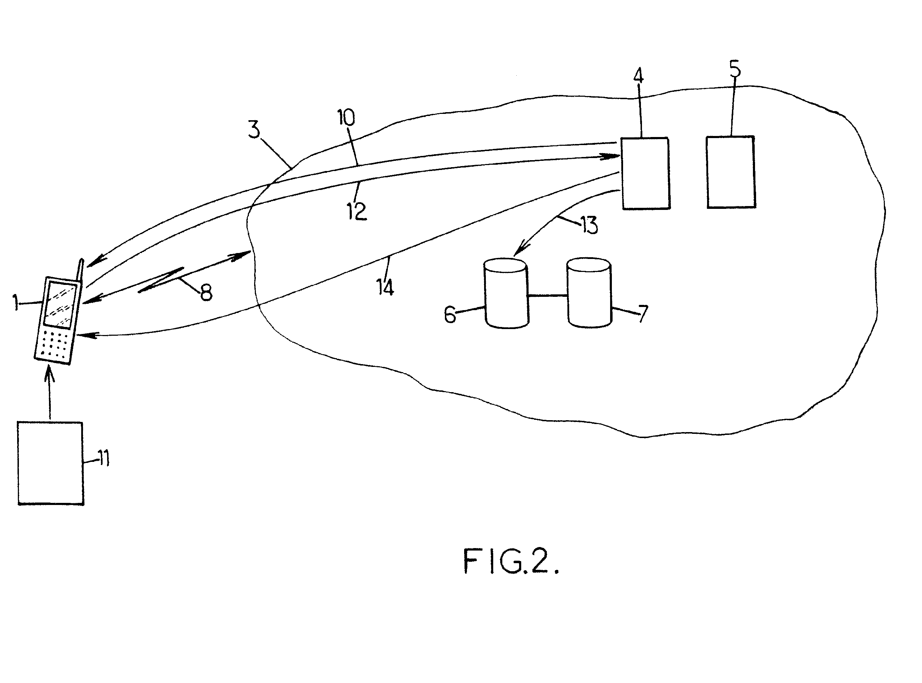

In order to enable personalized font messaging, the user of the communication device 1 first goes through a registration phase, as shown in FIG.2.

During this registration phase, a handwritten alphabet from the user of the communication device 1 is obtained. In the illustrated example, the handwritten alphabet is obtained by the communication network (step 12), but according to another possibility it could be obtained by the communication device 1 only.

Note that the handwritten alphabet refers to any kind of alphabet, i.e. letters and/or numbers in any possible language or format, that would be written by a human hand. For instance, the handwritten alphabet might consist in all small and/or capital letters from 'a' to `z', and all one-digit numbers from '0' to '9'.

The handwritten alphabet can be obtained by the communication network 3 (and/or by the communication device 1) in any possible manner.

As an example, the handwritten alphabet may be obtained by said user entering letters and/or numbers on a touch screen of the communication device 1, e.g. by means of a stylus. The handwritten alphabet may then be sent to the communication network 3, for instance to a server 4 in the communication network 3.

According to another advantageous example, the handwritten alphabet may be obtained by said user filling-in a registration form 11 on which he/she handwrites the letters and/or numbers, and then sending it (by himself/herself or via any intermediary) to the communication network 3, for instance to a server 4 in the communication network 3.

Such registration form advantageously has a predetermined format, so that the user knows what character must be written in what position. It may be retrieved e.g. from a portal handled by the operator of the communication network 3. In this case, the user may download the registration form through the communication device 1, or another appropriate device, such as a desktop or laptop embedding a Web browser. The user may then have to print the registration form out before filling-in it. Alternatively, the registration form may be physically obtained from retail outlets of the operator. Many other possibilities to get the registration form exist as will appear to one skilled in the art.

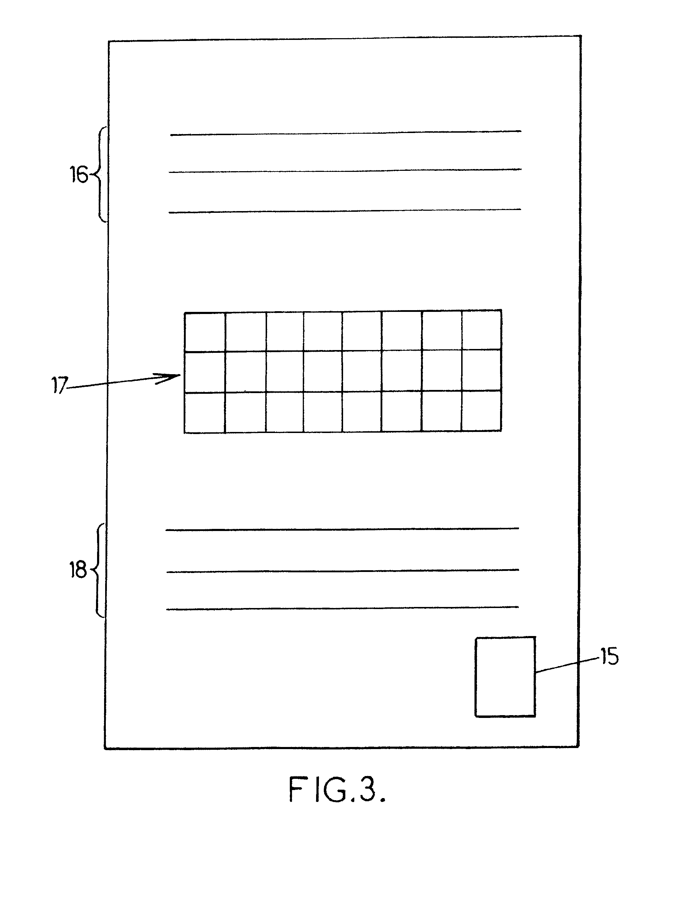

FIG.3 shows a non-limiting example of a registration form. In this example, the registration form comprises several parts, at least some of which are optional and/or may be replaced by other information.

The part 16 may contain terms of a contract between the user and the operator of the communication network 3 for enabling the personalized font messaging service. The part 18 may contain explanation as to how the registration form should be filled-in and delivered to the communication network and/or to the operator.

The registration form of FIG.3 also includes a QR-code 15. It is reminded that a QR-code is a matrix code (or two-dimensional bar code) created in Japan in 1994. The "QR" is derived from "Quick Response", as the QR-codes are arranged for their content to be decoded at high speed. The optional QR-code may include a registration ID of the user of the communication device 1 for the registration to the personalized font messaging service. It may be used to associate the user's handwriting with his/her registration ID.

The registration ID may advantageously be determined from an identifier of the user (e.g. the International Mobile Subscriber Identity IMSI which is a unique number associated with each GSM and UMTS network mobile phone user and is stored in the SIM inside the phone, and/or a phone number such as the Mobile Subscriber Integrated Services Digital Network Number MSISDN) or an identifier of the communication device 1 (e.g. the International Mobile Equipment Identity IMEI which is a number unique to every GSM and WCDMA mobile phone, as well as some satellite phones).

The optional QR-code may also include a service ID number relating to the personalized font messaging service and/or data such as an ID or location of a retail outlet from which the registration form was obtained.

The registration form of FIG.3 further includes a grid 17 on which the user can record his/her handwriting, by any possible means (pen, pencil, etc.). Each box of this grid may be associated to one letter and/or number of the alphabet, in a predetermined order (e.g. the alphabetic order from left to right and from top to bottom). Using this method facilitates the handwriting recording by the user and makes easier to the system to recognize the user's handwriting.

After completed this registration form or any similar registration form, the communication device 1 holding a camera may make a picture of the registration form and send it to the communication network 3, for instance to a server 4 in the communication network 3. Note that the picture may be taken and/or sent to the communication network 3 by any other means.

Alternatively, the registration form or any similar registration form may be sent to the communication network 3 (or its operator) in any other way. For example, it may be physically filed with a retail outlet of the operator of the communication network 3 or with the operator. In another example, it may be sent, e.g. after having been scanned, to a retail outlet of the operator of the communication network 3 or to the operator by email, through a Web portal, or other.

Once the handwritten alphabet is received in the communication network 3, the latter may acknowledge receipt to the communication device 1.

Advantageously, an application may be provided to the communication device 1 (step 10) so as to be installed and run on the communication device 1. This application may possibly be provided from the communication network 3. A direct or indirect transmission of the application may take place from the communication network 3 to the communication device 1, possibly before the handwritten alphabet is obtained at the communication network 3.

This application may take any possible form. For instance, it may consist in a Java applet, in a widget, or other.

The application may be obtained at the communication device 1 in many different ways, depending e.g. on the communication device 1 capabilities as well as the type of the communication network 3. Here are some exemplary possibilities for the downloading and installation of the application:
- From a Web portal of the operator of the communication network 3: the user can connect to the personalized font messaging service in order to select the application and install it on his/her communication device 1;
- From a desktop computer: the user downloads the application on his/her desktop computer. He/she needs e.g. a Bluetooth connection or a USB cable in order to install it on his/her communication device 1;
- From an IVR (Interactive Voice Response system): the user calls a specific number to get connected to an IVR of the operator of the communication network 3, where he/she selects the application. He/she receives a few minutes later a notification to install the application on his/her communication device 1, e.g. from a binary SMS;
- From an SMS: the user sends a specific message to a given SMS gateway (e.g. the SMS gateway 5 in FIG.2). He/she is notified a few minutes later with a binary SMS which contains the application.

The application installed and run on the communication device 1 may supervise at least one of the following operations: the transmission to the communication network 3 of the handwritten alphabet and/or of a personalized font derived from the handwritten alphabet, and/or the storage of the personalized font relating to the user of the communication device 1 in a local memory of the communication device 1, and/or the display, using the personalized font relating to the user of the communication device 1, of a message inputted on the communication device 1 by said user without performing a handwriting operation (as will be discussed below).

All or part of those operations may thus be carried out under supervision of the application, that is in an automatic or semi-automatic way, so as to limit the number of operations made directly by the user.

As an example, with respect to the transmission of the handwritten alphabet to the communication network 3, the application may automatically take the picture of the registration form 11 and send it to the server 4 in the communication network 3. In this way, the user does not have to do all those actions: take the picture, save it in an appropriate file, retrieve an address of the server 4, connect to the server 4 address, retrieve the saved picture and submit it to the server 4.

Once the handwritten alphabet is obtained at the communication network 3 (and/or at the communication device 1), a personalized font relating to the user of the communication device 1 is derived therefrom. The personalized font is thus derived so as to reflect said user's handwriting. This derivation may be performed by the communication network 3, e.g. when the handwritten alphabet is obtained at the communication network 3, and/or by the communication device 1, e.g. when the handwritten alphabet is obtained at the communication device 1 and not transmitted to the communication network 3.

The derivation may not need any particular operation, when the obtained handwritten alphabet already allows a clear correspondence with each letter and/or number of the alphabet. Alternatively, some further processing may be needed to build the personalized font from the obtained handwritten alphabet. As an example, such processing may optionally include image processing.

For example, when obtaining a handwritten alphabet from the user includes obtaining a picture of a registration form or any other image representing handwriting of the user, an image processing may be carried out on the obtained picture.

The image processing may take various forms, depending e.g. on the type of the image obtained at the communication network 3. When carried out in the communication network, the image processing may be performed by the server 4, or any other device in the communication network.

Also, at least part of the image processing may be performed at the communication device 1 itself. For example, if the handwritten alphabet was obtained at the communication network, said picture may be received and processed by the communication network. Alternatively, if the handwritten alphabet was obtained at the communication device, said picture may be processed directly by the communication device. A combination of these two options is also possible.

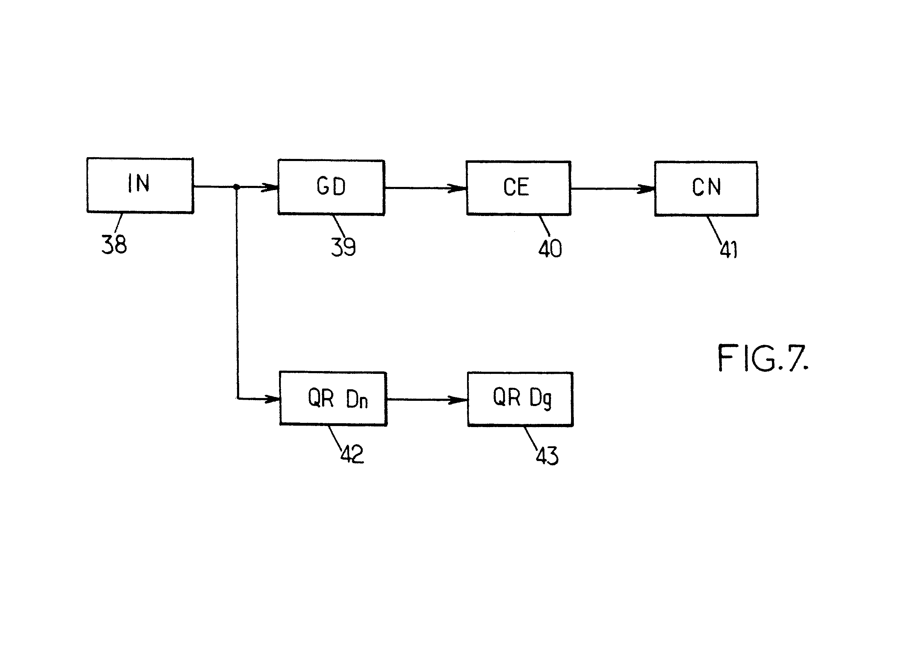

FIG.7 shows exemplary steps of an image processing that could be applied e.g. on a picture of a registration form of the type shown in FIG.3. All or only part (i.e. any combination) of those steps may be performed.

As shown in FIG.7, the image processing may include an image normalization step 38, in order to correct parameters that could affect the image quality, especially if the registration form picture was taken by a camera of the communication device 1. Image normalization 38 may correct in particular at least one of the following phenomena:
- Luminosity control: the luminosity may vary depending on the environment, the camera capabilities, the surface of the picture (registration form paper);
- Perspective deformation: as the picture may be taken from a paper (non-planned surface), the grid may be deformed. Moreover, it may be difficult to take a picture right in the middle;
- Rotation: the picture may not be right;
- Zoom and Focus: Cameras of mobile devices are not always adapted to take closed picture;
- Camera distortion: the more a picture is taken too closed, the more the resulted picture will be distorted;
- Compression: pictures from mobile devices are used to be compressed due to limited mobile device resources. This may affect the picture quality.

The communication network 3 (and/or the communication device 1) needs specific image processing tools in order to address at least one of these parameters which could affect the picture quality, and then facilitate the following image processing steps. Such tools are well known by one skilled in the image processing art and many of them are already available on the market and could be used within the framework of the present invention.

Since the registration form may have a predetermined format, e.g. the handwriting characters are put in a specific order in the grid, Optical Character Recognition (OCR) may not be needed. If however, the image representing the handwritten alphabet does not use a predetermined format, then OCR may be performed.

Step 39 relates to grid detection. With respect to the registration form of FIG.3, this step would consist in detecting the grid 17 on which the user of the communication device 1 has recorded a handwritten alphabet.

Such grid detection may make use of a Connected Components Analysis. This type of analysis, which is well-known in the image processing technical field, scans an image and groups its pixels into components based on pixel connectivity, i.e. all pixels in a connected component share similar pixel intensity values and are in some way connected with each other. Once all groups have been determined, each pixel is labelled with a gray level or a colour (colour labelling) according to the component it was assigned to. Extracting and labelling of various disjoint and connected components in an image is central to many automated image analysis applications.

The document "Sudoclick - Reconnaissance de grilles de Sudoku pour telephones portables", Department of Informatics - Fribourg University, Switzerland, drafted by Patrick Anagnostaras in May 2008 gives an example of such Connected Components Analysis in the context of suduko grid detection (see in particular section 3 "Algorithmes de detection"). This method can be used and transposed with no or only little adaptation to a handwritten alphabet grid.

Note that any other grid detection method could be used instead or in addition to such Connected Components Analysis.

Step 40 corresponds to character extraction. In this step, each character of the grid is extracted as a single picture. Again, this can be achieved with the Connected Component Analysis method or any other possible method.

The character normalization step 41 may be performed to compensate the fact that handwriting is not perfect. Some letters and/or numbers may be too much on the right/left/top/bottom or may not have the same size. To this end, the extracted characters may be scaled or moved. Any possible known method can be used to do so.

Optional steps may be carried out in case the handwritten alphabet image, e.g. the registration form picture, includes a QR-code 15 or similar code as shown in FIG.3. Those steps include a QR-code detection 42 and a QR-code decoding 43.

As already explained, a QR-code on the registration form may be used to identify a registration ID. QR-codes are already used from mobile devices in order to get some information about specific products: prices, web site, etc. There are a lot of existing solutions, especially Open Source solutions, which may be used to this end. Examples of such solutions include: Google ZXing, Open Source QR Code library, QR Code Decoder and J2ME QRCode.

The personalized font derived from the obtained handwritten alphabet may consist in a simple file including a mapping between each letter and/or number of the alphabet and their handwritten version resulting from the obtained handwritten alphabet. Such personalized font may thus return a handwritten version of a letter and/or number when said letter and/or number is typed on a keypad or drawn on a touch screen of the communication device 1. Conversely, it may be used to identify and possibly return an electronic version of a letter and/or number from a handwritten version thereof.

The personalized font relating to the user of the communication device 1 is stored in the communication network. Note that several personalized fonts may be obtained in relation to a same user. In this case, all or part of the personalized fonts relating to that user may be stored in the communication network.

To keep the link between the personalized font and the user of the communication device 1, the personalized font is stored in association with an identifier of said user (e.g. IMSI and/or phone number) or of the communication device 1 (e.g. IMEI). The identifier of said user or of the communication device 1 may be obtained from the QR-code of the registration form, or from the user or the communication device 1 themselves, for instance because the communication network can determine such identifier from the transmission of the handwritten alphabet, or in any other way.

The personalized font may be stored in a database 6, which may be dedicated or not to storage of personalized fonts (step 13). Another database 7 may be used to store user and/or communication device identifiers. In this case, a pointer or any other association means may be used to associate the personalized font relating to the user of the communication device 1 stored in database 6 with the identifier of said user or of the communication device 1 stored in database 7. The database 7 may for example be located in or associated with a messaging gateway 5, so that each time a message is transmitted from the user or from the communication device 1, the messaging gateway 5 can find out that this message needs to be transformed on the receiver's s device, by using a personalized font. Alternatively, both the personalized font and identifier may be stored in association in a single database.

By doing so, when a message will be sent from said user or from the communication device 1, the communication network will retrieve the corresponding personalized font (or at least one of the corresponding personalized fonts), as will be explained further below.

Advantageously, the personalized font relating to the user of the communication device 1 may be stored on the communication device 1, that is in a local memory of the communication device 1. If the personalized font was already available on the communication device 1 (e.g. because it was derived from the handwritten alphabet by the communication device 1 itself), its storage on the communication device 1 is no problem. Otherwise, the personalized font may be transmitted to the communication device 1 from the communication 3 (step 14), as shown in FIG.2, so as to be stored on the communication device 1 (the personalized font may thus be cached on the communication device 1). Such transmission may take place automatically or at the initiative of the user e.g. after he/she has received a notification to download the personalized font.

In this way, when a message will be typed by the user on a keypad or drawn on a touch screen of the communication device 1, the latter will be able to retrieve the corresponding personalized font from the local memory and display the composed message by using this personalized font. The user can thus check the visual rendering of his/her message with his/her handwriting, just like a recipient of the message will perceive it.

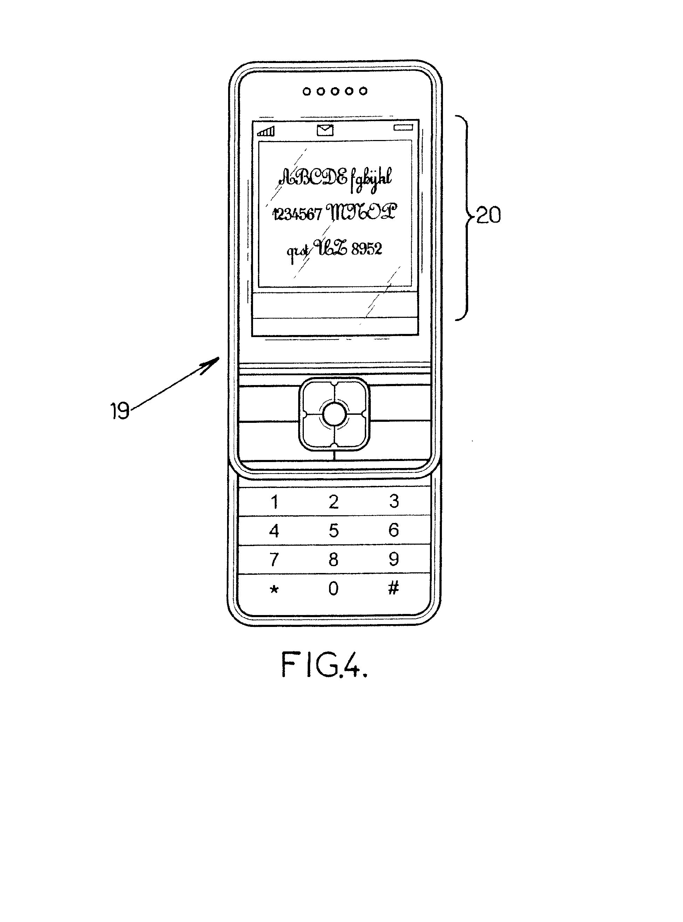

This situation is illustrated in FIG.4, where a message has been typed on the keypad or drawn on the touch screen of the mobile phone 19. While the message has been entered in an electronic format, its visual rendering on the screen 20 uses a personalized font derived from the handwritten alphabet of the user of the mobile phone 19. As a result, the message appears with said user's handwriting, although inputted in a conventional electronic manner.

Another advantageous aspect of the present invention, which relates to the transmission of a message from the communication device 1 and/or its user to another communication device 2 and/or its user through the communication network 3, will now be described.

This message is assumed to be inputted on the communication device 1 by the corresponding user without performing a handwriting operation. Typically, the message is inputted on the communication device 1 in a conventional electronic manner, such as through typing on a keypad or drawing on a touch screen of the communication device 1.

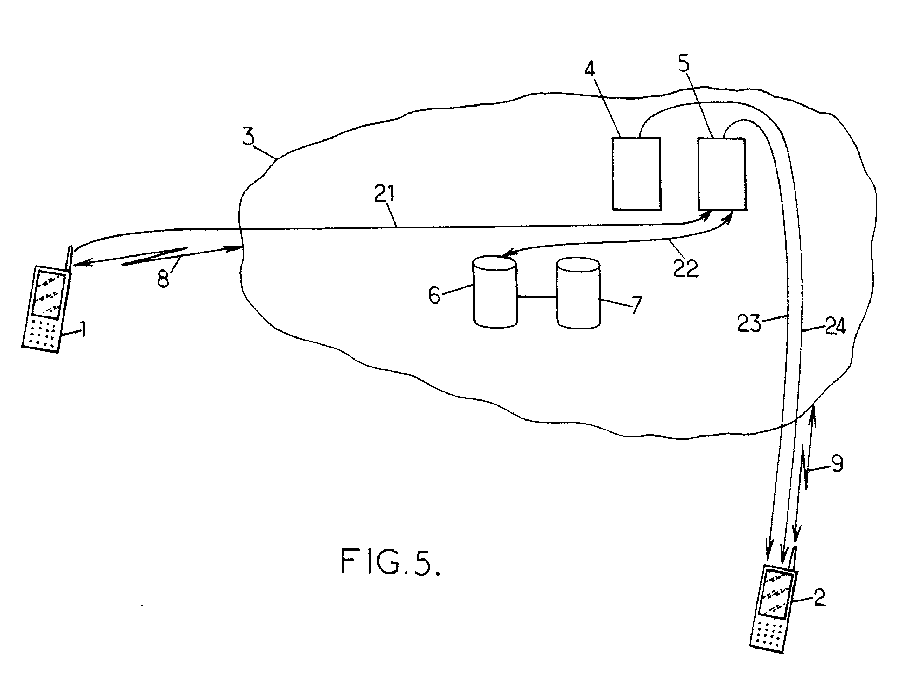

As shown in FIG.5, the message is first sent from the communication device 1 to the communication network 3 (step 21). The format and/or protocol for such transmission can be of any possibly type. In particular, if the message consists in text only, it may be sent using the Short Message Service. In this case, the message is an SMS message. This is in contrast with the prior art discussed in the introduction, where evolved protocols such as MMS are required to transmit message with a non default font, thus making the message composition and transmission more complex and costly.

Note that the transmission 21 may however make use of technologies other than SMS, such as MMS, HTML, XML, or other.

In case of an SMS message being transmitted from the communication device 1, this message may be received at an SMS gateway 5 for example. The message is then forwarded to the recipient of the message, namely the communication device 2 or its user (step 23).

In addition, the personalized font relating to the user of the communication device 1 is retrieved in the communication network 3. For example, this personalized font may be retrieved from the database 6 (step 22), where it was stored beforehand in association with an identifier of the communication device 1 or its user, as described above with reference to FIG.2.

A possible way of performing step 22 could be as follows. The message sent by the communication device 1 is associated with an identifier of the communication device 1 (e.g. IMEI) or its user (e.g. IMSI, phone number). Said identifier can be included in the message itself, or it can be retrieved by the communication network 3 as is conventional. The SMS gateway 5, upon receipt of the message, may query the database 6 with said identifier. After checking said identifier in the database 7, the database 6 returns the associated personalized font relating to the user of the communication device 1 to the SMS gateway 5.

The communication network selectively transmits a means for obtaining the retrieved personalized font to the communication device 2. (step 24). By doing so, it allows the communication device 2 to display the message using the personalized font relating to the user of the communication device 1. Note that this personalized font transmission 24 may take place before, at the same time or after the transmission 21 of the message. The transmission may be performed from the server 4 to the communication device 2 for example.

The means for obtaining the retrieved personalized font may take any possible form.

In a first example, said means may consist in the personalized font itself independently of the transmitted message. In this case, the server 4 may transmit the personalized font relating to the user of the communication device 1, for example inside an SMS message or other type of message. Upon receipt of such SMS message, the communication device 2 may get the personalized font and use it to display the message sent by the communication device 1.

In another example, said means may consist in the personalized font itself in relation to the transmitted message. In this case, the server 4 and/or the gateway 5 may modify the transmitted message so that it reflects directly the personalized font. For instance, if the transmitted message is an SMS message, it could be converted by the server 4 and/or the gateway 5 into e.g. an MMS message or any image-oriented message, so that the text appears using the personalized font of the user of the communication device 1. In other words, the transmitted message as forwarded to the communication device 2 uses the personalized font directly on the text content. In this scenario, the transmissions 23 and 24 are concomitant. This mode of operation is particularly simple for the communication device 2, since it does need to perform any local operation to get the message presented in a handwritten manner, all or most of the operations being carried out in the communication network 3.

In still another example, the means for obtaining the retrieved personalized font may comprise a link to download the personalized font from the communication network 3. For instance, the transmission 23 may contain a URL (Uniform Resource Locator) address or any other type of link, pointing to the personalized font relating the user of the communication device 1. The URL address may point directly to the corresponding entry in the database 6, to the server 4, to the gateway 5, or other.

In still another example, the means for obtaining the retrieved personalized font may comprise a link to download an application capable of automatically getting said personalized font from the communication network 3 and making the communication device 2 display the message using said personalized font. This application may reside e.g. on the server 4 and/or on the gateway 5. It is advantageously the same application as the one mentioned above in the part of the description referring to FIG.2. The link to the application may be transmitted to the communication device 2 in an SMS message. The link may comprise a URL address or any other type of link. When clicking on the URL, the user of the communication device 2 may trigger the downloading and installation of the application on the communication device 2.

If the user of the communication device 2 chooses to view the SMS sent from the communication device 1 with the handwriting of its user, the application once installed may download the personalized font of the user of the communication device 1 (or at least one of the personalized fonts when several personalized fonts have been stored for this user) on the communication device 2.

The user of the communication device 2 may in turn go through a registration process under supervision of said application, so as to have his/her personalized font(s) stored in the communication network 3. This is possible especially when the application is the same as the one mentioned above in the part of the description referring to FIG.2.

The message transmitted from the communication network 3 to the communication device 2 (step 23) may advantageously include an invitation for its user to enter a registration phase so as to enable personalized font messaging. With such incitement, the number of registered users may increase quite quickly.

As mentioned above, the means for obtaining the retrieved personalized font is transmitted selectively from the communication network 3 to the communication device 2. Several levels of selectivity may be defined depending on the needs.

In one example, the selectivity may be null. In this case, said means would be always transmitted from the communication network 3 to the communication device 2, with no other condition.

Alternatively, the means for obtaining the retrieved personalized font may be transmitted from the communication network 3 to the communication device 2 only if the user of the communication device 2 is a registered user, i.e. if said user has gone through a registration phase to the personalized font messaging service as described above. In this way, only registered users may be able to visualize messages with a handwritten presentation.

In another example which may be used in replacement of or in addition to the previous example, the means for obtaining the retrieved personalized font may be transmitted from the communication network 3 to the communication device 2 only if it was not already transmitted with respect to a previous message from the communication device 1 or its user to the communication device 2. The communication device 2 is arranged for storing said personalized font in a local memory in association with an identifier of the communication device 1 or its user and for retrieving said personalized font when receiving a new message from the communication device 1 or its user. The personalized font may thus be cached on the communication device 2 for later use with respect to new messages to come. It may be associated to a contact, e.g. from an address book, corresponding to the user of the communication device 1 (the sender of the message). In this way, displaying a new message on the communication device 2 with the personalized font of the user of the communication device 1 is particularly easy, since only local operations on the communication device 2 can be carried out. By locally storing and not systematically sending the personalized font, network occupation and delays are reduced.

Once the communication device 2 is provided with the personalized font of the user of the communication device 1, it can display the transmitted message using said personalized font. This could lead to a presentation such as illustrated in FIG.4, thereby providing a nice and more intimate visual experience to the end user.

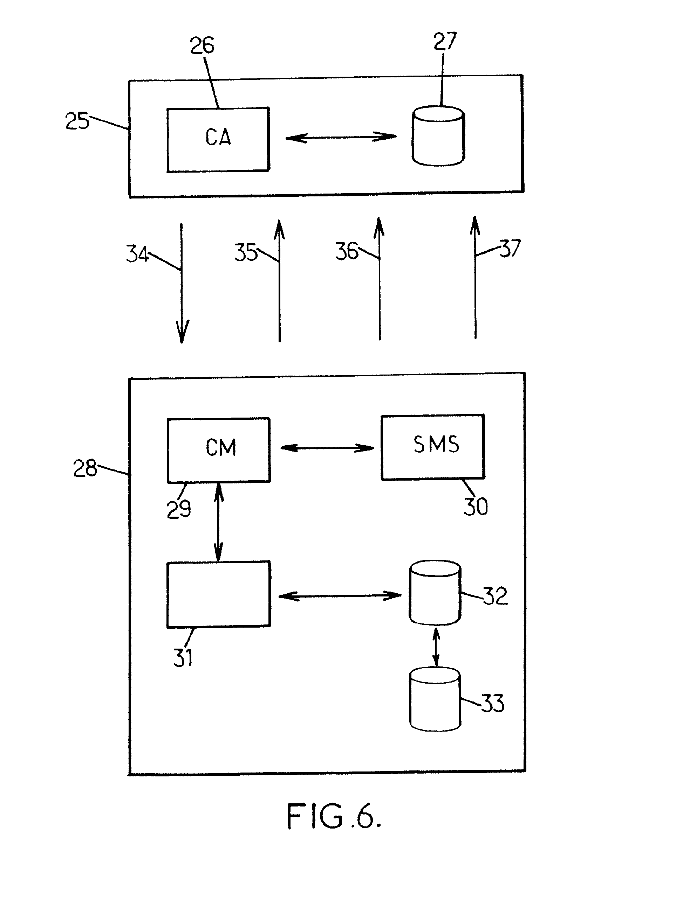

FIG.6 is a collaboration diagram which schematically shows possible functional means for implementing an embodiment of the invention.

FIG.6 shows a communication device 25, which may be used for sending and/or receiving messages and display them with a personalized font derived from a handwritten alphabet. The communication device 25 may correspond to the communication device 1 and/or the communication device 2 of FIG.1. The communication device 25 is capable of embedding an application CA (for "Cursive Application") 26 for carrying out at least one of the operations mentioned above. It also includes a local memory 27 for storing at least one personalized font, which may relate respectively to the user of the communication device 25, to the user of at least one other communication device, or both. The personalized font(s) stored in the local memory 27 may be stored in association with an identifier of the relevant user and/or communication device.

The communication device 25 also includes a (non-represented) retrieving unit for retrieving a personalized font stored in the memory 27 and relating to the user who has composed a message to be displayed, and a (non-represented) for displaying this message using the retrieved personalized font.

Advantageously, the communication device 25 may be subjected to some requirements so as to render the personalized font messaging service properly. Those requirements may include:
- a minimum available storage space so as to be able to store the personalized fonts relating to a determined number of users (e.g. a few Mbytes for about 100 users);
- a minimum screen size (e.g. so that an entire handwritten SMS may be read on a single or at most two screen shots);
- a minimum uploading and/or downloading throughput (e.g. several hundreds of kbit/s); this may lead to the use of advanced technologies rather than old technologies: as an example EDGE, UMTS or LTE mobile phones may be favoured compared to simple GSM or GPRS mobile phones;
- a camera if this is needed for the registration phase, etc.

FIG.6 also shows an entity 28 which may represent a device or a system in a communication network.

The entity 28 includes a module CM (for "Cursive Messaging") 29 for supervising the operations relating to the personalized font messaging on the communication network side. Such entity 28 may consist in a server, such as the server 4 of FIG.1, or in any other device or system.

The entity 28 further includes a messaging gateway, e.g. a SMS gateway 30, such as the gateway 5 of FIG. 1.

In addition, the entity 28 may comprise an image processing module 31 when needed. Such image processing module 31 may be used in particular when the registration of a user to the personalized font messaging service includes the reception of an image of a handwritten alphabet and its processing for identifying each letter / number of the handwritten alphabet properly. Any other font deriving unit could be used in replacement of or in addition to the image processing module 31, for deriving a personalized font from a handwritten alphabet.

The entity 28 also includes a database 32 for storing the personalized fonts relating to all registered users and a database 33 for storing identifiers relating to all registered users and/or to the communication devices of all registered users. A link is provided between both databases, so that an association exists between any of the personalized fonts and a respective user or communication device identifier. The database 32 and 33 may be separate databases (like the databases 6 and 7 of **FIG. 1****)** or may be combined in a single database.

The exchanges between the communication device 25 and the entity 28, illustrated in FIG.6, include a transmission 34 of a handwritten alphabet and/or a personalized font derived from a handwritten alphabet, e.g. in the form of a registration form filled-in in handwriting, a transmission 35 of a personalized font derived from the handwritten alphabet, a transmission 36 of the application CA for carrying out the personalized font messaging service on the communication device side, and a transmission 37 of a means for obtaining a personalized font and/or a message containing text.

Of course, other exchanges may occur between the communication device 25 and the entity 28 in accordance with the operations described above.

Note that all or part of the operations described so far, on the communication network side and/or on the communication device side, may be carried out by means of at least one computer program product comprising appropriate code instructions. In particular, a computer program product may be loaded and run on the communication device 25.

## Claims

1. A method of enabling personalized font messaging in a communication network (3), the method comprising a registration phase including, with respect to a first user having a first communication device (1):
- obtaining (12) a handwritten alphabet from the first user;
- deriving a personalized font relating to the first user from the obtained handwritten alphabet;
- storing, in the communication network, the personalized font in association with an identifier of the first user or of the first communication device.

2. The method of claim 1, further comprising storing the personalized font on the first communication device (1).

3. The method of claim 1, wherein obtaining a handwritten alphabet from the first user comprises obtaining a picture of a registration form (11) having a predetermined format and on which the first user has recorded the handwritten alphabet.

4. The method of claim 3, further comprising carrying out image processing on the obtained picture, said image processing including at least one of: image normalization (38), detection of a grid (39) in the registration form on which the first user has recorded the handwritten alphabet, character extraction (40) and normalization (41), and analysis of a code (42,43) in the registration form.

5. The method of claim 1, further comprising providing the first communication device (1,25) with an application (26) to be installed and run on the first communication device, so as to supervise at least one of: transmitting the handwritten alphabet and/or the personalized font to the communication network (3), storing the personalized font relating to the first user in a local memory (27) of the first communication device, and displaying, using the personalized font relating to the first user, a message inputted on the first communication device by the first user without performing a handwriting operation.

6. The method of claim 1, comprising a subsequent message transmission phase for the transmission of a message from the first communication device (1) of the registered first user to a second communication device (2) of a second user through the communication network (3), the message transmission phase including:
- receiving (21), at the communication network, a message from the first communication device, said message being inputted on the first communication device by the first user without performing a handwriting operation;
- retrieving (22), in the communication network, the personalized font relating to the first user stored in association with an identifier of the first user or of the first communication device;
- transmitting (23) the message from the communication network to the second communication device;
- selectively transmitting (23) from the communication network to the second communication device a means for obtaining the retrieved personalized font, so as to allow the second communication device to display the message using said personalized font.

7. The method of claim 6, wherein the means for obtaining the retrieved personalized font is transmitted from the communication network (3) to the second communication device (2) only if the second user is a registered user.

8. The method of claim 6, wherein the means for obtaining the retrieved personalized font is transmitted from the communication network (3) to the second communication device (2,25) only if it was not already transmitted with respect to a previous message from the first user or the first communication device (1) to the second communication device, the second communication device being arranged for storing said personalized font in a local memory (27) in association with an identifier of the first user or of the first communication device and for retrieving said personalized font when receiving a new message from the first user or the first communication device.

9. The method of claim 6, wherein the means for obtaining the retrieved personalized font comprises any one of: said personalized font itself independently of the transmitted message, said personalized font itself in relation to the transmitted message, said message being transmitted from the communication network (3) to the second communication device (2) using said personalized font, a link to download the personalized font from the communication network, and a link to download an application (26) capable of automatically getting said personalized font from the communication network and making the second communication device display the message using said personalized font.

10. The method of claim 6, wherein the message transmitted from the communication network (3) to the second communication device (2) includes an invitation for the second user to enter a registration phase so as to enable personalized font messaging.

11. The method as claimed in any one of the foregoing claims, wherein the communication network (3) is a radio communication network and at least one of the first (1) and second (2) communication devices is a mobile phone or a smartphone.

12. The method of claim 6, wherein receiving (21), at the communication network (3), a message from the first communication device (1) uses the Short Message Service.

13. A device or system in a communication network (3) for enabling personalized font messaging according to the method of any one of the foregoing claims, comprising with respect to a first user having a first communication device (1):
- means for obtaining a personalized font relating to the first user, derived from a handwritten alphabet from the first user;
- a memory (6) arranged for storing the personalized font in association with an identifier of the first user or of the first communication device.

14. A communication device (25) comprising:
- a transmission unit arranged for transmitting a handwritten alphabet and/or a personalized font derived from a handwritten alphabet to a communication network;
- a memory (27) arranged for storing at least one personalized font relating to at least one user respectively;
- a retrieving unit for retrieving a personalized font stored in said memory and relating to a user who has composed a message to be displayed; and
- a display unit arranged for displaying said message using said personalized font.

15. A computer program product comprising code instructions for carrying out the following operations, when loaded and run on a communication device (25):
- transmitting a handwritten alphabet and/or a personalized font derived from a handwritten alphabet to a communication network;
- storing in a memory (27) of the communication device at least one personalized font relating to at least one user respectively; and
- retrieving a personalized font stored in said memory and relating to a user who has composed a message to be displayed.
